# EUROPEAN PATENT APPLICATION

(11) **EP 4 794 323 A1**
(43) Date of publication of application: **19.08.2026**
(21) Application number: 25197828.4
(22) Date of filing: 25.08.2025
(51) Int. Cl.: H04N 1/00, H04N 1/23, G03G 15/00

(54) **IMAGE FORMING SYSTEM**

(30) Priority: 18.02.2025 JP 2025024507; 25.03.2025 JP 2025050661; 25.03.2025 JP 2025050774; 26.03.2025 JP 2025052483
(71) Applicant: FUJIFILM Business Innovation Corp., Minato-ku Tokyo (JP)
(72) Inventor: HORIKAWA, Kazuhiko, Yokohama-shi, Kanagawa (JP); MATSUO, Kota, Yokohama-shi, Kanagawa (JP); YOKOHASHI, Mami, Yokohama-shi, Kanagawa (JP); SAKAMOTO, Masaomi, Yokohama-shi, Kanagawa (JP); MATSUGUMA, Chihiro, Yokohama-shi, Kanagawa (JP)
(74) Representative: Becker Kurig & Partner Patentanwälte mbB

(57) **Abstract**

An image forming system includes a processor configured to perform a control of acquiring measurement information of a first side of a measured recording medium that is information related to a physical characteristic of the first side, a control of outputting image forming control information of the first side that is information for controlling image forming on the first side, based on the measurement information of the first side, and a control of outputting image forming control information of a second side of the recording medium that is information for controlling image forming on the second side, based on the measurement information of the first side.

## Description

### BACKGROUND OF THE INVENTION

### (i) Field of the Invention

The present invention relates to an image forming system.

### (ii) Description of Related Art

JP2024-124888A discloses a processing apparatus including detection means for detecting paper sheet information that is information reflecting a feature of a paper sheet, from the paper sheet. In the disclosure, this processing apparatus includes setting means for setting at least one printing control parameter used for performing printing on the paper sheet as information to be registered in a paper sheet database based on the paper sheet information detected by the detection means.

### SUMMARY OF THE INVENTION

For example, in an image forming apparatus, a setting of the image forming apparatus may be adjusted in accordance with a characteristic of the recording medium to obtain an image forming output intended by a user. For example, this adjustment of the setting of the image forming apparatus is performed based on a measurement result of the recording medium by a measuring device. Here, in performing two-sided printing on the recording medium, different printing settings may be necessary between a front side and a rear side. In this case, efficient determination of the printing setting for both of the front side and the rear side using the measuring device may not be easy.

An object of the present invention is to efficiently set image forming for a front side and a rear side in an image forming apparatus that determines a printing setting using a measuring device.

According to a first aspect of the present disclosure, there is provided an image forming system including a processor configured to perform a control of acquiring measurement information of a first side of a measured recording medium that is information related to a physical characteristic of the first side, a control of outputting image forming control information of the first side that is information for controlling image forming on the first side, based on the measurement information of the first side, and a control of outputting image forming control information of a second side of the recording medium that is information for controlling image forming on the second side, based on the measurement information of the first side.

According to a second aspect of the present disclosure, in the image forming system according to the first aspect, the processor may be further configured to perform a control of determining a characteristic of the recording medium and the image forming control information based on the measurement information of the first side, and a control of outputting the image forming control information of the second side based on the characteristic of the recording medium and image forming control information of the recording medium that is information for controlling image forming on the recording medium.

According to a third aspect of the present disclosure, in the image forming system according to the second aspect, the image forming control information of the second side may include information related to a transfer voltage for the second side.

According to a fourth aspect of the present disclosure, in the image forming system according to any one of the first to third aspects, the image forming control information of the second side may be information in which performing the image forming on the second side after the image forming on the first side is taken into consideration.

According to a fifth aspect of the present disclosure, in the image forming system according to the fourth aspect, the information in which performing the image forming is taken into consideration may be information in which an effect of any one of a fixing temperature or a transfer voltage on the first side is taken into consideration.

According to the first aspect of the present disclosure, the image forming on the front side and the rear side is efficiently set.

According to the second aspect of the present disclosure, image forming with higher accuracy can be performed using data of the recording medium in the past accumulated in the image forming system.

According to the third aspect of the present disclosure, a difference between charging characteristics of the front side and the rear side can be handled.

According to the fourth aspect of the present disclosure, an effect on a paper sheet during the image forming on the first side can be reduced during the image forming on the second side.

According to the fifth aspect of the present disclosure, variation in image quality and unevenness of density on the rear side and unevenness of are easily reduced, compared to a case where the effect of the fixing temperature or the transfer voltage is not taken into consideration.

### BRIEF DESCRIPTION OF THE DRAWINGS

Exemplary embodiment(s) of the present invention will be described in detail based on the following figures, wherein:
FIG. 1 is a diagram for describing an image forming system to which the present exemplary embodiment is applied;
FIG. 2 is a block diagram illustrating an example of a hardware configuration of a control unit of a printing apparatus and an example of a hardware configuration of a server apparatus;
FIG. 3 is a block diagram illustrating an example of a hardware configuration of a medium measuring device;
FIG. 4 is a block diagram illustrating an example of a functional configuration of the server apparatus;
FIG. 5 is a diagram for describing an example of a flow of calculating a characteristic of a recording medium and a printing parameter from measurement values measured by a sensor unit and an environment sensor;
FIG. 6 is a diagram illustrating an example of processing in a case where the medium characteristic information is newly created using the medium measuring device;
FIG. 7 is a diagram illustrating an example of a list display screen for displaying a standard list and a medium characteristic list;
FIG. 8 is a diagram illustrating an example of a medium characteristic input screen displayed in newly creating the medium characteristic list;
FIG. 9 is a diagram illustrating an example of a waiting screen displayed in a case where the medium measuring device measures the recording medium;
FIG. 10 is a diagram illustrating an example of a result screen showing a measurement result of the medium measuring device;
FIG. 11 is a diagram illustrating an example of a printing parameter input screen;
FIG. 12 is a flowchart illustrating an example of a flow of update and registration processing of updating registered medium characteristic information; and
FIG. 13 is a diagram illustrating another example of the result screen showing the measurement result of the medium measuring device.

### DETAILED DESCRIPTION OF THE INVENTION

Hereinafter, an exemplary embodiment of the present invention will be described in detail with reference to the accompanying drawings.

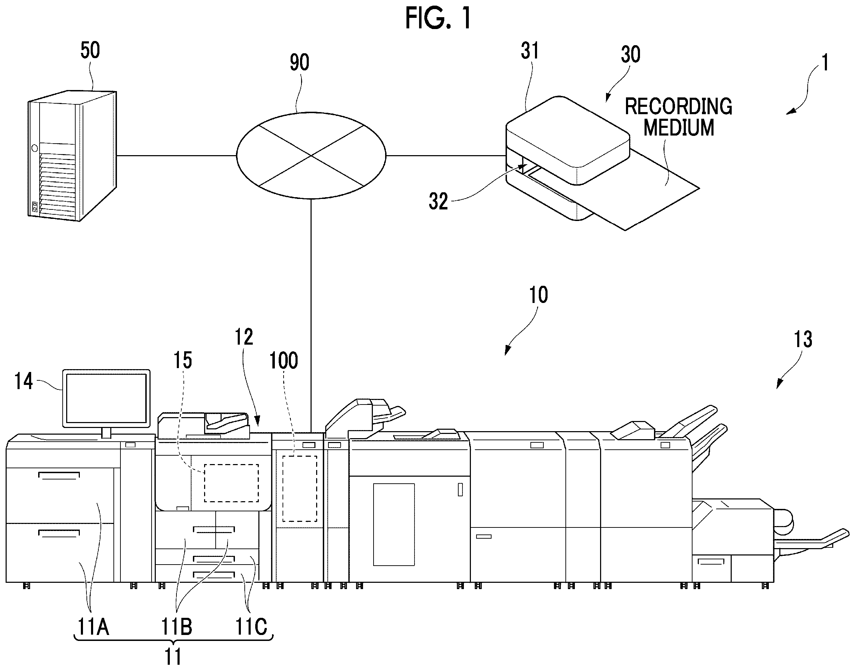

FIG. 1 is a diagram for describing an image forming system 1 to which the present exemplary embodiment is applied.

The image forming system 1 according to the present exemplary embodiment includes a printing apparatus 10, a medium measuring device 30, and a server apparatus 50. The printing apparatus 10, the medium measuring device 30, and the server apparatus 50 are connected via a network 90.

A user who uses the image forming system 1 instructs the printing apparatus 10 to perform printing on a recording medium using the medium characteristic information. Here, the medium characteristic information is information in which a characteristic of the recording medium and a printing parameter for controlling the printing on the recording medium are stored in association with each other.

The printing apparatus 10 is, for example, a so-called production printer used for printing for office use. The production printer has a function of executing high-speed printing processing with high image quality, compared to a printer for home use. The printing apparatus 10 is not limited to the production printer and may be a printer for business use, a printer for home use, or the like.

The printing apparatus 10 includes a feeding unit 11, a printing unit 12, a post-processing unit 13, a display and operation unit 14, and an environment sensor 15. The printing apparatus 10 includes a control unit 100 that controls the whole printing apparatus 10.

The feeding unit 11 feeds a recording medium on which the printing is performed. The feeding unit 11 includes a plurality of feeding trays 11A, 11B, and 11C for accommodating each type of recording media to be fed. In the example illustrated in FIG. 1, the feeding unit 11 includes two feeding trays 11A, two feeding trays 11B, and two feeding trays 11C. Each of the feeding trays 11A to 11C can feed recording media having different sizes or the same size.

The printing unit 12 may use not only an electrophotographic method of fixing and forming an image by transferring toner clinging to a charged and exposed photoconductor to a recording material but also, for example, an ink jet method of forming an image by ejecting ink onto a recording material.

The printing unit 12 is provided with a reversing mechanism (not illustrated) that reverses front and rear sides of the recording medium. The front and the rear sides of the recording medium after an image is formed on one side are reversed by passing through the reversing mechanism. The image is also formed on the other side of the recording medium. Accordingly, the image is formed on both sides of the recording medium. The one side of the recording medium may be referred to as the front side, and the other side of the recording medium may be referred to as the rear side. The front side is an example of a first side, and the rear side is an example of a second side. The front side may be the second side, and the rear side may be the first side.

The post-processing unit 13 performs various types of post-processing on the recording medium on which the printing is performed by the printing unit 12. The post-processing unit 13 is provided with, for example, processing of discharging printed matters of the same page as a unit by changing positions (that is, stack processing), staple processing of stapling a plurality of sheets of recording media, and processing of binding a plurality of sheets of recording media with an adhesive tape.

The display and operation unit 14 is an interface that displays various images for operation and various types of information for notifying a user and receives operations of the user. The display and operation unit 14 includes, for example, an input unit such as a button for operation or a touch sensor that detects an operation performed with a fingertip of the user, and a display unit such as a liquid crystal display or an organic electro-luminescent (EL) display.

The environment sensor 15 measures a state of an environment in which the printing apparatus 10 is installed. The environment sensor 15 includes, for example, a thermometer and a hygrometer. In the example illustrated in FIG. 1, the environment sensor 15 is disposed inside the printing apparatus 10 and is disposed near the feeding unit 11. The environment sensor 15 may be disposed outside the printing apparatus 10.

The medium measuring device 30 is a device that measures a recording medium. The medium measuring device 30 includes a housing 31 including a sensor for measuring the recording medium, and a gap 32 for inserting the recording medium, and is configured to be compact and incorporate a box. The medium measuring device 30 may be provided inside the printing apparatus 10. For example, the sensor for measuring the recording medium may be provided on a transport path for transporting the recording medium in the printing apparatus 10 and measure the recording medium while the recording medium is transported. Alternatively, for example, sensors may be provided in the feeding trays 11A to 11C of the printing apparatus 10, and the recording media accommodated in the feeding trays may be measured.

The server apparatus 50 functions as a database that stores a plurality of pieces of medium characteristic information. In the medium characteristic information, the characteristic of the recording medium and the printing parameter for performing the printing are stored in association with each other. The server apparatus 50 is an example of an information processing apparatus.

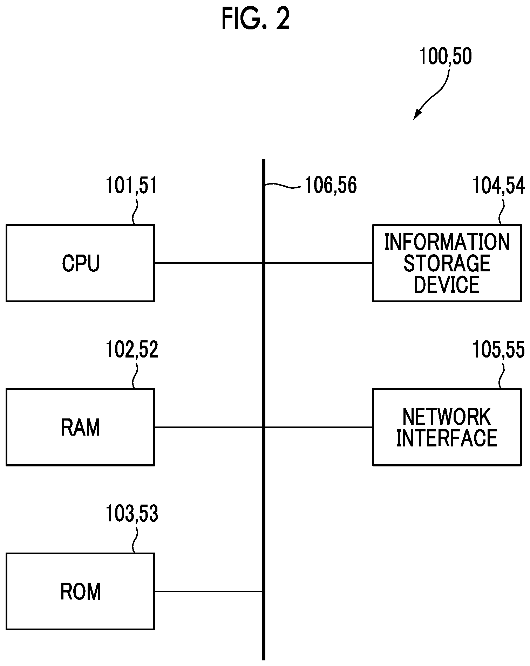

FIG. 2 is a block diagram illustrating an example of a hardware configuration of the control unit 100 of the printing apparatus 10 and an example of a hardware configuration of the server apparatus 50.

The control unit 100 of the printing apparatus 10 includes a central processing unit (CPU) 101, a random access memory (RAM) 102, a read only memory (ROM) 103, an information storage device 104, a network interface 105, and a signal line 106.

The CPU 101 controls the whole printing apparatus 10 as an example of a processor. In a case where a control program is executed by the CPU 101, each functional unit of the printing apparatus 10 is controlled. The RAM 102 is used as a work area in a case where the CPU 101 performs calculation. The ROM 103 is a memory in which various programs and the like executed by the CPU 101 are recorded. The information storage device 104 stores various settings used for controlling the printing apparatus 10, image information used for the printing, and the like. A hard disk drive (HDD), a semiconductor memory, or the like can be used as the information storage device 104. The network interface 105 transmits and receives data via the network 90 (see FIG. 1). Each unit of the control unit 100 is connected via a bus or the signal line 106.

As a hardware configuration of the server apparatus 50, for example, the same hardware configuration as the control unit 100 of the printing apparatus 10 can be used. The server apparatus 50 includes a CPU 51, a RAM 52, a ROM 53, an information storage device 54, a network interface 55, and a signal line 56. The CPU 51 controls the server apparatus 50 as an example of a processor. In a case where a control program is executed by the CPU 51, each functional unit of the server apparatus 50 is controlled. The RAM 52 is used as a work area in a case where the CPU 51 performs calculation. The ROM 53 is a memory in which various programs and the like executed by the CPU 51 are recorded.

The information storage device 54 stores a trained machine learning model used for information processing via the server apparatus 50, various settings used for calculation control, the medium characteristic information, and the like. A hard disk drive (HDD), a semiconductor memory, or the like can be used as the information storage device 54. The information storage device 54 stores, for example, the medium characteristic information.

The network interface 55 transmits and receives data to and from the printing apparatus 10 and the medium measuring device 30 via the network 90 (see FIG. 1).

Each unit of the server apparatus 50 is connected via a bus or the signal line 56.

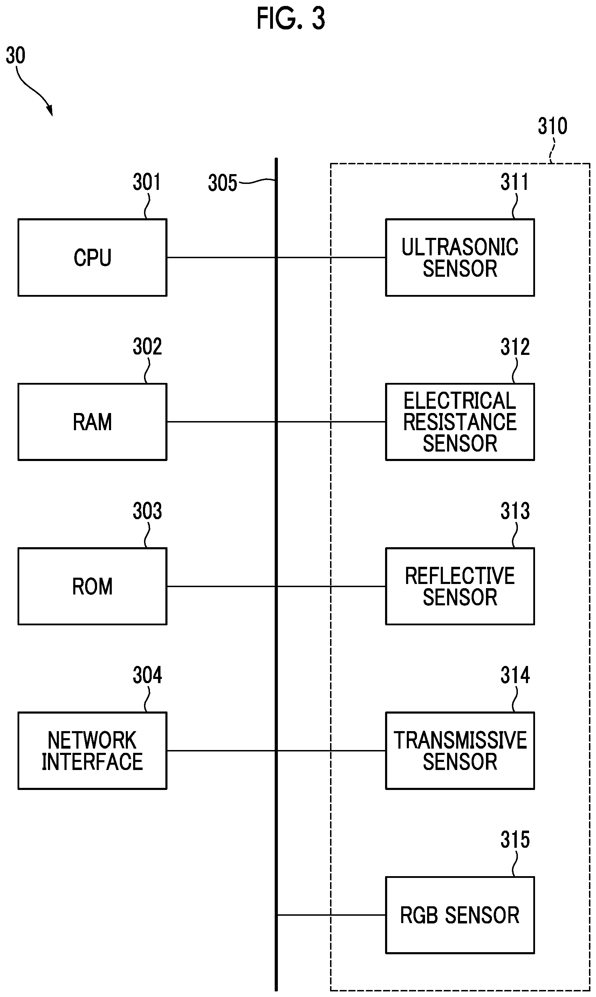

FIG. 3 is a block diagram illustrating an example of a hardware configuration of the medium measuring device 30.

The medium measuring device 30 includes a CPU 301, a RAM 302, a ROM 303, a network interface 304, a bus 305, and a sensor unit 310.

The CPU 301 controls the whole medium measuring device 30 as an example of a processor. In a case where a control program is executed by the CPU 301, each functional unit of the medium measuring device 30 is controlled. The RAM 302 is used as a work area in a case where the CPU 301 performs calculation. The ROM 303 is a memory in which various programs and the like executed by the CPU 301 are recorded.

The network interface 304 transmits measurement values measured by various sensors of the sensor unit 310 (described later) to the server apparatus 50 (see FIG. 1) via the network 90 (see FIG. 1).

The sensor unit 310 includes a sensor that measures a physical property of the recording medium. Types and the number of sensors included in the sensor unit 310 are not particularly limited. In the illustrated example, the sensor unit 310 includes an ultrasonic sensor 311, an electrical resistance sensor 312, a reflective sensor 313, a transmissive sensor 314, and an RGB sensor 315. The physical property of the recording medium is an example of a physical characteristic of the recording medium.

The ultrasonic sensor 311 generates an ultrasonic wave having a predetermined intensity from one side of the recording medium in a thickness direction to the recording medium, and measures the intensity of the ultrasonic wave on the other side of the recording medium in the thickness direction.

The electrical resistance sensor 312 measures electrical resistance of the recording medium by causing a microcurrent to flow through the recording medium. The electrical resistance sensor 312, for example, measures volume resistance as the electrical resistance of the recording medium in the thickness direction by causing the microcurrent to flow in the thickness direction of the recording medium. Alternatively, for example, the electrical resistance sensor 312 may measure surface resistance as the electrical resistance in a direction along a surface of the recording medium by causing the microcurrent to flow in the direction along the surface of the recording medium.

The reflective sensor 313 measures reflected light of the recording medium. More specifically, intensities of specularly reflected light and diffusely reflected light on the surface of the recording medium are measured. The transmissive sensor 314 measures an intensity of transmitted light of the recording medium. The RGB sensor 315 measures the intensity of the reflected light from the recording medium for each of red (R), green (G), and blue (B). Measurement values that are measurement results of these sensors are examples of information related to the physical property of the recording medium. The information related to the physical property of the recording medium may include, in addition to the measurement values, information on the physical property of the recording medium calculated from the measurement values. For example, in the present exemplary embodiment, the measurement value of the ultrasonic sensor 311 is converted into a basis weight of the recording medium by a basis weight conversion unit 521 of the server apparatus 50 (described later). However, the medium measuring device 30 may calculate the basis weight of the recording medium from the measurement value of the ultrasonic sensor 311. The basis weight of the recording medium is an example of the physical property of the recording medium. That is, examples of the information related to the physical property of the recording medium include an electrical characteristic such as the electrical resistance of the recording medium, a physical characteristic such as the basis weight, and other characteristics such as the reflected light, the transmitted light, and color.

The medium measuring device 30 outputs values obtained by measuring the physical property of the recording medium via each sensor of the sensor unit 310 to the server apparatus 50 (see FIG. 1) as the measurement values. For example, in a case where the electrical resistance of the recording medium is measured, a value in Ω units is output to the server apparatus 50 as the measurement value.

### <Functional Configuration of Server Apparatus 50>

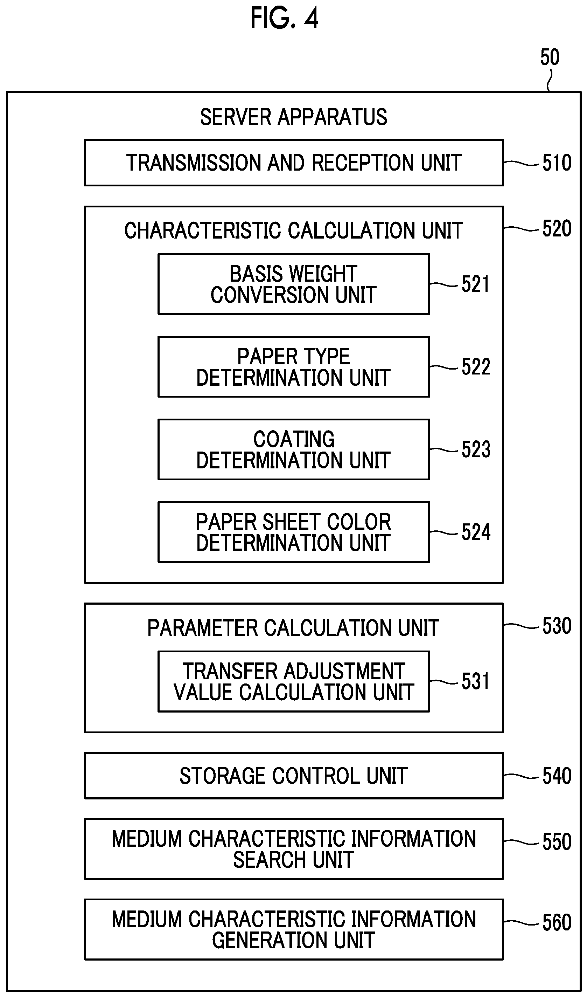

FIG. 4 is a block diagram illustrating an example of a functional configuration of the server apparatus 50.

The server apparatus 50 includes a transmission and reception unit 510, a characteristic calculation unit 520, a parameter calculation unit 530, a storage control unit 540, a medium characteristic information search unit 550, and a medium characteristic information generation unit 560.

The transmission and reception unit 510 is connected to the printing apparatus 10 (see FIG. 1) and the medium measuring device 30 (see FIG. 1) using the network interface 55 (see FIG. 2) and transmits and receives various types of information. The transmission and reception unit 510 receives the measurement values measured by the sensor unit 310 (see FIG. 3) of the medium measuring device 30 from the medium measuring device 30. The transmission and reception unit 510 receives an instruction of the user from the printing apparatus 10 and transmits various types of information corresponding to the instruction of the user to the printing apparatus 10.

The characteristic calculation unit 520 calculates the characteristic of the recording medium using the information related to the physical property of the recording medium. In the present exemplary embodiment, the characteristic calculation unit 520 calculates characteristic information of the recording medium using the measurement values acquired by receiving the measurement values from the medium measuring device 30. The characteristic information is an example of the characteristic of the recording medium. In the present exemplary embodiment, the characteristic information of the recording medium is calculated using a measurement value of the environment sensor 15 (see FIG. 1) of the printing apparatus 10, in addition to the measurement values acquired from the medium measuring device 30. A source from which the information related to the physical property of the recording medium used for calculating the characteristic of the recording medium via the characteristic calculation unit 520 is acquired is not particularly limited, and the information related to the physical property of the recording medium may be acquired from a database in which the information related to the physical property of the recording medium is stored. For example, the information related to the physical property of the recording medium may be stored in advance in association with a product name, a product number, and the like of the recording medium. **In** this case, the characteristic of the recording medium may be calculated using the information related to the physical property of the recording medium associated with the product name, the product number, and the like of the recording medium. Alternatively, for example, the measurement values may be acquired from a history of past measurement performed by the medium measuring device 30, and the characteristic of the recording medium may be calculated using the past measurement values of the medium measuring device 30 and the current measurement value of the environment sensor 15.

Here, the characteristic information is information on the recording medium derived from the physical property of the recording medium. Examples of the characteristic information include a type of the recording medium, presence or absence of a coating, the basis weight of the recording medium, and the color of the paper sheet. The type of the recording medium is a category in which the recording media are divided by a material, such as plain paper, embossed paper, and a film.

The characteristic calculation unit 520 includes the basis weight conversion unit 521, a paper type determination unit 522, a coating determination unit 523, and a paper sheet color determination unit 524.

The basis weight conversion unit 521 converts the basis weight using the measurement value of the ultrasonic sensor 311. The paper type determination unit 522 estimates light transmittance of the recording medium using at least the measurement value of the transmissive sensor 314 and, for example, distinguishes between embossed paper and plain paper. The paper type determination unit 522 may further perform determination related to a paper type using the measurement values of the sensors other than the transmissive sensor 314. The coating determination unit 523, for example, determines the presence or absence of the coating from the intensities of the specularly reflected light and the diffusely reflected light on the surface of the recording medium using at least the measurement value of the reflective sensor 313. The coating determination unit 523 may further perform determination related to the coating using the measurement values of the sensors other than the reflective sensor 313. For example, a type of coating such as a matte coating or a cast coating may be determined. The paper sheet color determination unit 524 determines a paper sheet color (the color of the recording medium) using the measurement value of the RGB sensor 315.

The parameter calculation unit 530 calculates the printing parameter using the measurement values acquired from the medium measuring device 30. The parameter calculation unit 530 includes a transfer adjustment value calculation unit 531. The transfer adjustment value calculation unit 531 calculates a transfer voltage using at least the measurement value of the electrical resistance of the recording medium acquired from the medium measuring device 30. In calculating the transfer voltage, the transfer adjustment value calculation unit 531 may further use other measurement values for the calculation. The printing parameter calculated by the parameter calculation unit 530 is not limited to the transfer voltage. For example, a fixing temperature setting value for fixing a coloring material image to the recording medium, a transfer output, a fixing drying temperature, and the like may be calculated.

The storage control unit 540 adds the medium characteristic information to the medium characteristic list in which the medium characteristic information is collected, or changes content of the medium characteristic information included in the medium characteristic list. Here, the medium characteristic list is a list of pieces of medium characteristic information created by the user using the printing apparatus 10. In the medium characteristic list, the printing parameter corresponding to status of use in which the user uses the printing apparatus 10 is set. For example, the printing parameter is set in accordance with a temperature and humidity of a place in which the printing apparatus 10 is disposed. For example, the printing parameter in which a change in the recording medium over time is taken into consideration is set. For example, the printing parameter is set by printing quality intended by the user. For example, the printing parameter may be corrected in accordance with a change in the temperature or the humidity of the place in which the printing apparatus 10 is disposed, and a value of the printing parameter may be corrected in accordance with the printing quality intended by the user. The medium characteristic information specific to the user is registered in the medium characteristic list in accordance with the status of the user.

In the present exemplary embodiment, the medium characteristic list is stored in the information storage device 54 of the server apparatus 50. In the medium characteristic information, "name" that is information for identifying the medium characteristic information added to a medium characteristic information group in the past, the "characteristic of the recording medium", and the "printing parameter" created to obtain the printing quality intended by the user are stored in association with each other. Examples of the "printing parameter" include an alignment roll load, a transfer nip load, the transfer output, the fixing drying temperature, a fixing nip temperature, air assist for the paper sheet trays, registration/alignment adjustment, curl correction, and a print speed. The medium characteristic information may include a comment or the like input by the user. The medium characteristic list is an example of the medium characteristic information group. The name is an example of a paper sheet brand. The printing parameter is an example of image forming control information.

Here, the characteristic of the recording medium may be different between the front side and the rear side of the recording medium. For example, the front side may be subjected to coating processing, and the rear side may not be subjected to the coating processing. For example, the front side may be subjected to metallic processing, and the rear side may not be subjected to the metallic processing.

In addition, here, the printing parameter may be different between the front side and the rear side of the recording medium. The printing parameter of the front side and the printing parameter of the rear side are generally set to be different in performing two-sided printing. For example, in a case where the front side is subjected to the coating processing, and the rear side is not subjected to the coating processing, the printing parameter of the front side may not be directly applicable to the printing parameter of the rear side because of such a difference in processing. Therefore, the printing parameter may be set to be different between the front side and the rear side by taking the difference in processing into consideration. Alternatively, for example, the printing parameter of the rear side may be set to be different from the printing parameter of the front side by taking an effect of image forming on the front side into consideration. In this case, for example, the transfer output and the fixing drying temperature on the rear side may be set to be different by taking fixing processing and transfer processing performed on the front side in image forming processing into consideration.

The storage control unit 540 manages the characteristic of the front side of the recording medium and the characteristic of the rear side of the recording medium in each medium characteristic information in the medium characteristic list in association with each other. The storage control unit 540 manages the printing parameter of the front side and the printing parameter of the rear side in association with each other. The storage control unit 540 stores a coefficient obtained from a difference between values of the printing parameter of the front side and the printing parameter of the rear side. This coefficient is an indicator for estimating the printing parameter of the rear side from the printing parameter of the front side.

The storage control unit 540 stores a standard list in the information storage device 54 of the server apparatus 50. Here, the standard list is, for example, a list of pieces of medium characteristic information created by a manufacturer in manufacturing the printing apparatus 10. In general, the printing parameter stored in the standard list is not set to the printing parameter corresponding to status of use in which the user uses the printing apparatus 10.

The medium characteristic information search unit 550 searches for the registered medium characteristic information using the medium characteristic information created by measuring the front side of the recording medium via the medium measuring device 30.

More specifically, a front side of a new recording medium is measured by the medium measuring device 30, and a matching ratio with respect to the medium characteristic information registered in the medium characteristic list is calculated using the characteristic information of the front side calculated by the characteristic calculation unit 520 and the printing parameter of the front side calculated by the parameter calculation unit 530. The medium characteristic information having a high matching ratio is specified and displayed to the user as a search result. The number of pieces of medium characteristic information displayed to the user as the search result may be only one of the medium characteristic information having the highest matching ratio, or a plurality of pieces of medium characteristic information may be displayed to the user in a descending order of the matching ratio. The matching ratio is an example of a search condition.

In comparing the characteristic information of the recording medium measured by the medium measuring device 30 with the printing parameter, all pieces of the calculated characteristic information and all calculated printing parameters may be used for the comparison. In comparing the characteristic information of the new recording medium measured by the medium measuring device 30 with the printing parameter, a part of the calculated characteristic information and a part of the printing parameters may be used for the comparison. In comparing the characteristic information of the new recording medium measured by the medium measuring device 30 with the printing parameter, the comparison may be performed with only the calculated characteristic information, or the comparison may be performed with only the calculated printing parameter. These settings of the comparison are also examples of the search condition.

An item of which a value is frequently changed depending on preference of the user may not be used as an item to be compared. For example, in a case where a search is performed using an item of which a numerical value is frequently changed depending on the preference of the user, a search result appropriate for other users may not be obtained. That is, a parameter value to be used for the comparison and a parameter value not to be used for the comparison may be determined in advance among the printing parameters. In performing the comparison, the comparison may be performed using not only the calculated characteristic information and the calculated printing parameter but also the measurement values used for the calculation. These settings of the comparison are also examples of the search condition.

The characteristic information of the recording medium and the printing parameter used for the comparison may be acquired by the characteristic information of the recording medium and the printing parameter acquired in real time by the measuring device, or the characteristic information of the recording medium and the printing parameter measured in the past may be used. For example, the characteristic information of the recording medium and the printing parameter input by the user based on information described in a catalog may be used for the comparison.

The medium characteristic information generation unit 560 newly creates the medium characteristic information using the characteristic information and the printing parameter calculated by the characteristic calculation unit 520 and the parameter calculation unit 530. The medium characteristic information generation unit 560 acquires the medium characteristic information having the high matching ratio with respect to the calculated characteristic information and the calculated printing parameter by copying the medium characteristic information from the standard list. The medium characteristic information is newly created with reference to the acquired medium characteristic information having the high matching ratio. For example, the characteristic of the recording medium and the printing parameter included in the medium characteristic information may be simply used as new medium characteristic information. Alternatively, for example, a part of the characteristic of the recording medium and the printing parameter included in the medium characteristic information may be used as new medium characteristic information.

The medium characteristic information generation unit 560 calculates the printing parameter of the rear side by estimating the printing parameter of the rear side from the printing parameter of the front side. For example, the medium characteristic information generation unit 560 refers to the medium characteristic information having a high matching ratio specified from the printing parameter of the front side and the characteristic of the front side of the recording medium. The printing parameter of the rear side is estimated by acquiring the printing parameter of the rear side in the medium characteristic information having the high matching ratio. Alternatively, the printing parameter of the rear side is estimated by multiplying the coefficient corresponding to the medium characteristic information having the high matching ratio by the printing parameter of the front side.

The medium characteristic information generation unit 560 may estimate the characteristic of the rear side of the recording medium from the characteristic of the front side of the recording medium. For example, the medium characteristic information generation unit 560 refers to the medium characteristic information having the high matching ratio specified from the printing parameter of the front side and the characteristic of the front side of the recording medium. The characteristic of the rear side of the recording medium may be estimated by acquiring the characteristic of the rear side of the recording medium in the medium characteristic information having the high matching ratio.

In adding the new medium characteristic information to the medium characteristic information group, the name of the new medium characteristic information is not displayed to the user. Other pieces of the medium characteristic information are displayed. For example, the characteristic information and the printing parameter are displayed. The name is information that is not used for calculating the characteristic of the recording medium and the printing parameter from the standard list.

In the other pieces of the medium characteristic information displayed, the characteristic information affecting the printing parameter has a higher display priority than the printing parameter. Specifically, the characteristic information is displayed at a position at which the characteristic information is more easily recognized by the user than the printing parameter. For example, in displaying the characteristic information and the printing parameter to the user, the characteristic information and the printing parameter are displayed to be arranged in order from the left side of the screen.

The medium characteristic information generation unit 560 may acquire the medium characteristic information having a high matching ratio with respect to the calculated characteristic information and the calculated printing parameter by copying the medium characteristic information from the medium characteristic list. In this case, new medium characteristic information is obtained by overwriting the acquired medium characteristic information with the calculated characteristic information and the calculated printing parameter.

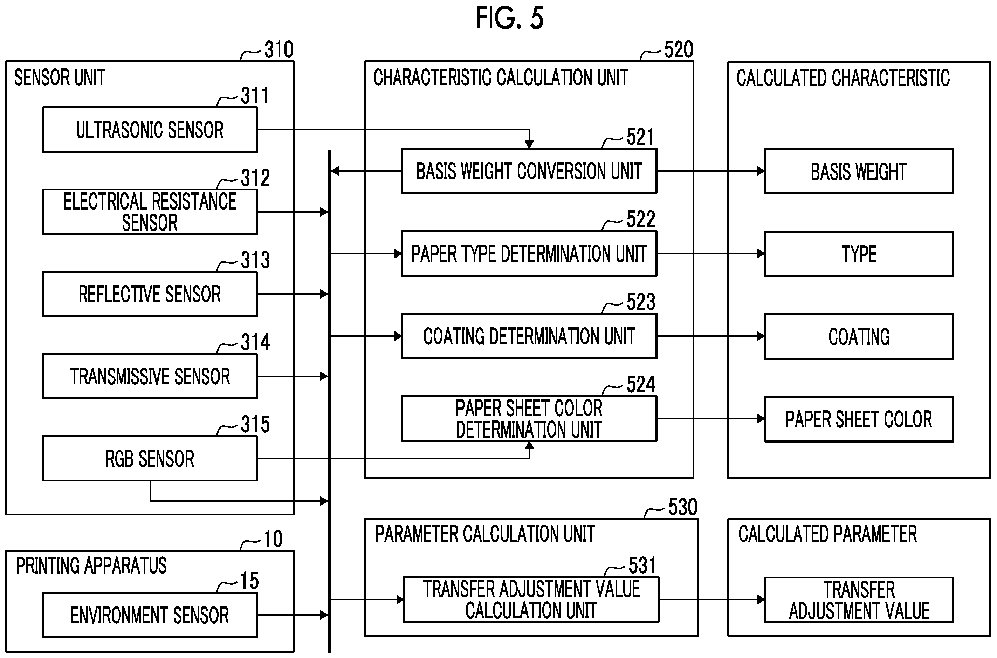

FIG. 5 is a diagram for describing an example of a flow of calculating the characteristic of the recording medium and the printing parameter from the measurement values measured by the sensor unit 310 and the environment sensor 15.

As illustrated, the basis weight conversion unit 521 converts the measurement value of the ultrasonic sensor 311 into a basis weight. The basis weight converted by the basis weight conversion unit 521 is output as a characteristic value and is used as input values of the characteristic calculation unit 520 and the parameter calculation unit 530.

The paper type determination unit 522 receives input of the basis weight converted by the basis weight conversion unit 521, the measurement value of the electrical resistance sensor 312, the measurement value of the reflective sensor 313, the measurement value of the transmissive sensor 314, the measurement value of the RGB sensor 315, and the measurement value of the environment sensor 15. The paper type determination unit 522 outputs the type of the recording medium from the input values.

The coating determination unit 523 receives input of the basis weight converted by the basis weight conversion unit 521, the measurement value of the electrical resistance sensor 312, the measurement value of the reflective sensor 313, the measurement value of the transmissive sensor 314, the measurement value of the RGB sensor 315, and the measurement value of the environment sensor 15. The coating determination unit 523 determines and outputs the presence or absence of the coating from the input values.

The paper sheet color determination unit 524 receives input of the value of the RGB sensor 315 and outputs the paper sheet color.

The transfer adjustment value calculation unit 531 receives input of the basis weight converted by the basis weight conversion unit 521, the measurement value of the electrical resistance sensor 312, the measurement value of the reflective sensor 313, the measurement value of the transmissive sensor 314, the measurement value of the RGB sensor 315, and the measurement value of the environment sensor 15. The transfer adjustment value calculation unit 531 outputs a transfer adjustment value using the input basis weight and the input measurement values.

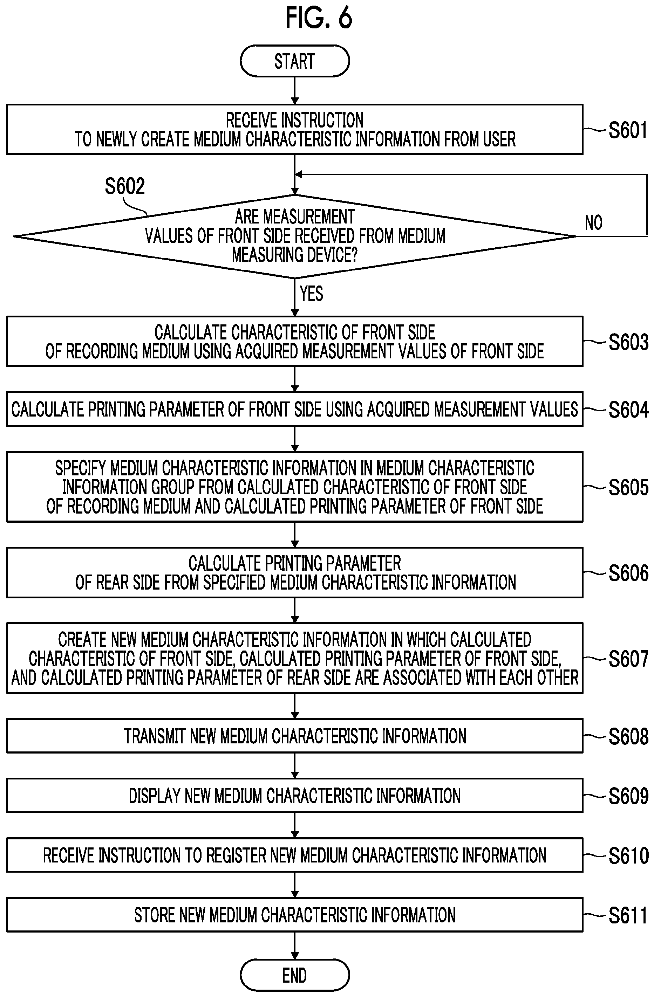

FIG. 6 is a diagram illustrating an example of processing in a case where the medium characteristic information is newly created using the medium measuring device 30.

First, the transmission and reception unit 510 of the server apparatus 50 receives an instruction to create new medium characteristic information from the user via the display and operation unit 14 of the printing apparatus 10 (step S601). Whether or not the measurement values of the front side are received from the medium measuring device 30 is determined (step S602). In a case where the measurement values of the front side are not received from the medium measuring device 30 (NO in step S602), the processing returns to step S602, and whether or not the measurement values are received from the medium measuring device 30 is determined again. In a case where the measurement values of the front side are received from the medium measuring device 30 (YES in step S602), the characteristic calculation unit 520 calculates the characteristic of the front side of the recording medium using the acquired measurement values of the front side (step S603). The parameter calculation unit 530 calculates the printing parameter of the front side using the acquired measurement values of the front side (step S604). The medium characteristic information search unit 550 of the server apparatus 50 specifies the medium characteristic information in the medium characteristic information group from the calculated characteristic of the front side of the recording medium and the calculated printing parameter of the front side (step S605). The printing parameter of the rear side is calculated from the specified medium characteristic information (step S606). Next, new medium characteristic information in which the calculated characteristic of the front side of the recording medium, the calculated printing parameter of the front side, and the calculated printing parameter of the rear side are associated with each other is created (step S607). Next, the transmission and reception unit 510 transmits the new medium characteristic information to the control unit 100 of the printing apparatus 10 (step S608). Here, the server apparatus displays the new medium characteristic information on the display and operation unit 14 of the printing apparatus 10 (step S609). In a case where an instruction to register the new medium characteristic information is received via the display and operation unit 14 of the printing apparatus 10 (step S610), the server apparatus 50 stores the new medium characteristic information in the information storage device 54 (see FIG. 2) (step S611) and finishes the processing.

The characteristic information used here is, for example, information indicating the characteristic of the recording medium such as a size of the recording medium, the type (material) of the recording medium, the presence or absence of the coating, the number of sheets in one set, presence or absence of a punch hole, the color of the recording medium, and the basis weight of the recording medium. The characteristic information is information affecting the printing parameter. For example, a guideline for a value of the transfer voltage is determined by the type of the recording medium.

Examples of the size of the recording medium include sizes determined by the JIS standard, such as A4 size, A5 size, B4 size, and B5 size. Examples of the type of the recording medium include plain paper, coated paper obtained by coating a surface of plain paper with a resin or the like, thick paper having a larger basis weight than plain paper, thin paper having a smaller basis weight than plain paper, and an OHP film. The number of sheets in one set is information indicating the number of sheets in one set in the recording medium of which one set includes a plurality of sheets. The presence or absence of the punch hole is information indicating whether or not a punch hole is made on the recording medium. Various colors such as yellow, blue, and black other than white can be used as the color of the recording medium.

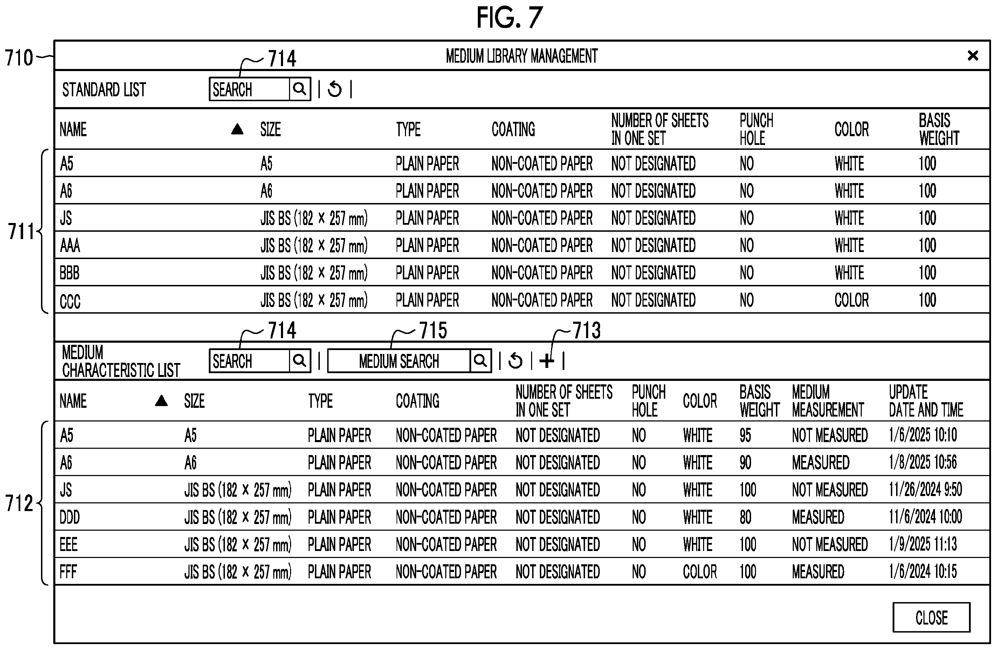

FIG. 7 is a diagram illustrating an example of a list display screen 710 for displaying the standard list and the medium characteristic list.

In the illustrated example, the medium characteristic information registered in the standard list is displayed in a profile display region 711 in which the medium characteristic information is listed. In the illustrated example, the profile display region 711 shows six pieces of medium characteristic information having names "A5", "A6", "JS", "AAA", "BBB", and "CCC". In addition, "size", "type", "coating", "number of sheets in one set", "punch hole", "color", and "basis weight" are displayed in association with the name as items registered in the medium characteristic information. Specifically, in the medium characteristic information of which "name" is "A5", "A5" is displayed as "size", "plain paper" is displayed as "type", "non-coated paper" is displayed as "coating", "not designated" is displayed as "number of sheets in one set", "no" is displayed as "punch hole", "white" is displayed as "color", and "100" is displayed as "basis weight".

The medium characteristic information registered in the medium characteristic list is displayed in a medium characteristic list display region 712 in which the medium characteristic information is listed. In the illustrated example, the medium information groups having names "A5", "A6", "JS", "DDD", "EEE", and "FFF" are displayed. While the same name is used as the name of the medium characteristic information between the standard list and the medium characteristic list in the illustrated example, use of the same name may be prevented.

In the illustrated example, "size", "type", "coating", "number of sheets in one set", "punch hole", "color", "basis weight", "medium measurement", and "update date and time" are displayed in association with "name". Specifically, in the medium characteristic list of which "name" is "A5", "A5" is displayed as "size", "plain paper" is displayed as "type", "non-coated paper" is displayed as "coating", "not designated" is displayed as "number of sheets in one set", "no" is displayed as "punch hole", "white" is displayed as "color", and "95" is displayed as "basis weight". The displayed characteristic information is not limited to the illustrated example, and other characteristics may be displayed.

In the illustrated example, "medium measurement" and "update date and time" are displayed as items of the medium characteristic information displayed in the medium characteristic list, in addition to the items displayed in the above standard list.

Here, a field of "medium measurement" is a field showing whether or not the medium characteristic information is created using the medium measuring device 30 and displays a value of "not measured" or "measured". Here, the medium characteristic information with which "not measured" is associated indicates that the medium characteristic information is registered without using the medium measuring device 30. The medium characteristic information associated with "measured" indicates that the medium characteristic information is created using the medium measuring device 30.

In addition, "update date and time" indicates a date and time when the medium characteristic information is created or updated. In the illustrated example, in the medium characteristic information of which "name" is "A5", "not measured" is shown as "medium measurement", and "2025/1/6 10:10" is shown as "update date and time".

A new creation mark 713 with which the user provides an instruction to create new medium characteristic information is displayed on the list display screen 710. In a case where the new creation mark 713 is touched, a transition is made to a medium characteristic input screen 720 (described later).

A search box 714 for searching for a name of a profile and a medium search box 715 for searching for performing a search using the medium measuring device 30 are displayed on the list display screen 710. The medium search box 715 is used to perform a search using the medium characteristic information search unit 550. Thus, in a case where the medium search box 715 is touched, a screen (not illustrated) showing a method of using the medium measuring device 30 is displayed. The user measures the recording medium by operating the medium measuring device 30 with reference to the screen showing the method of using the medium measuring device 30. In a case where the measurement is finished, the medium characteristic information having a high matching ratio with respect to the measured medium is displayed as the search result.

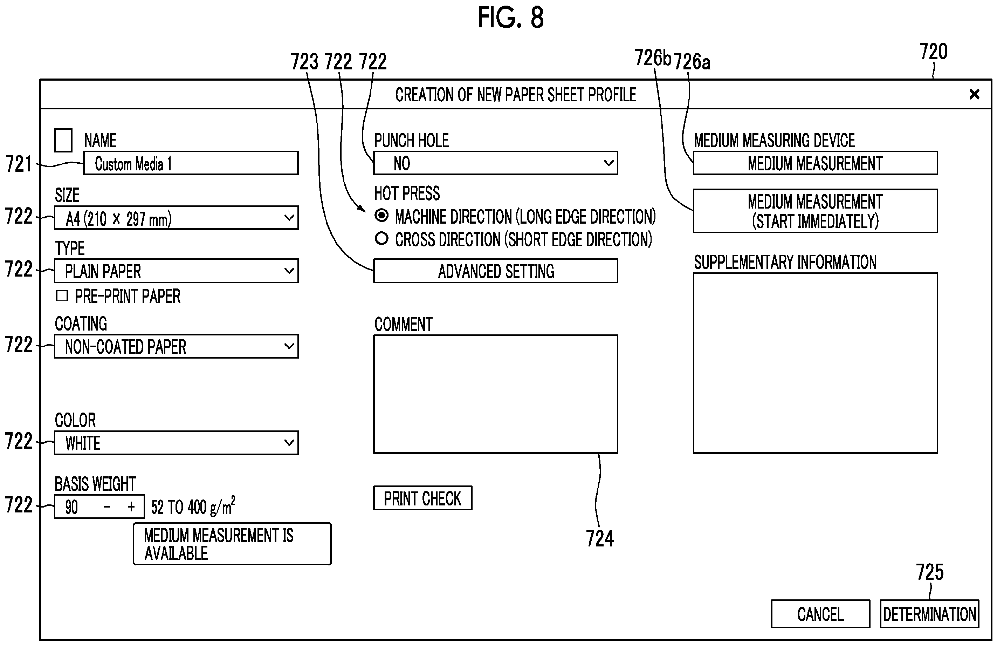

FIG. 8 is a diagram illustrating an example of the medium characteristic input screen 720 displayed in newly creating the medium characteristic list. A text box 721 for inputting a name of the newly created medium characteristic list is displayed on the medium characteristic input screen 720. A plurality of input units 722 for inputting medium characteristics are displayed on the medium characteristic input screen 720. Text information indicating items of the characteristics input by the input units is displayed in association with the input units 722. A method for inputting the medium characteristics into the input units 722 is not particularly limited. Examples of the method include a method of displaying options using a pull-down method and making a selection, a method of inputting a numerical value, and a method of making a selection using a radio button.

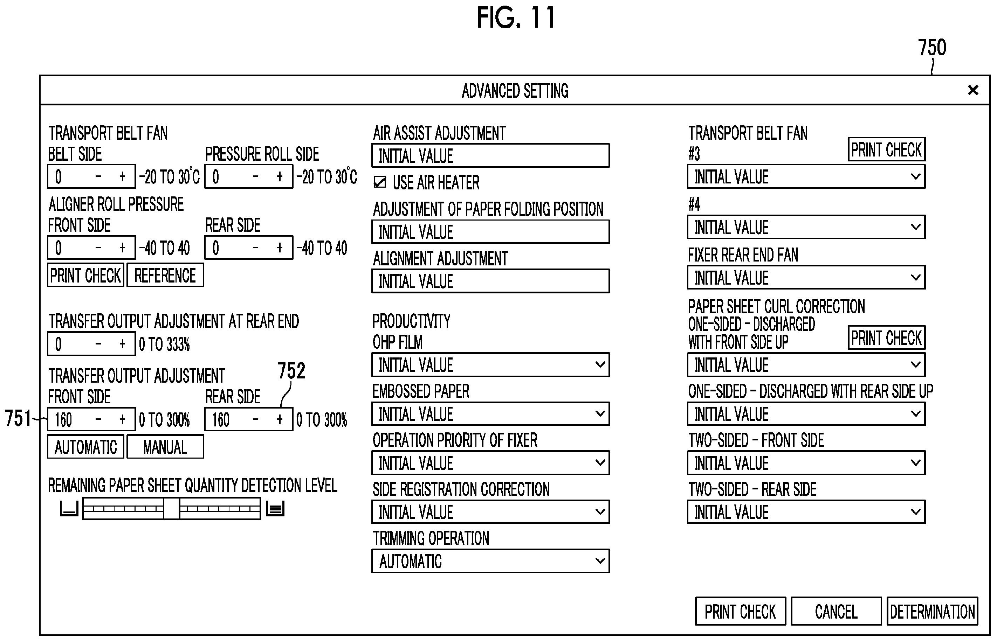

The medium characteristic input screen 720 includes a transition button 723 for transitioning to a printing parameter input screen 750 (see FIG. 11) for inputting the printing parameter. The transition button 723 is displayed as "advanced setting". The printing parameter input screen 750 will be described later.

A sentence input field 724 for the user to input text information is provided on the medium characteristic input screen 720. The sentence input field 724 is a field in which the user can freely provide input, and a text "comment" is displayed in association with the sentence input field 724 near the sentence input field 724. Content input into the sentence input field 724 is not particularly limited.

A button 726a and a button 726b that are buttons for determining to create the medium characteristic list using the medium measuring device 30 (see FIG. 1) are displayed on the medium characteristic input screen 720. The button 726a is displayed as "medium measurement", and the button 726b is displayed as "medium measurement (start immediately)". In a case where the button 726a is selected, a screen (not illustrated) showing a method of using the medium measuring device 30 is displayed. The user measures the recording medium by operating the medium measuring device 30 with reference to the screen showing the method of using the medium measuring device 30. In a case where the button 726b is selected, the measurement of the recording medium by the medium measuring device 30 is immediately started.

A determination button 725 for determining to register the medium characteristic list is displayed on the medium characteristic input screen 720. The determination button 725 is displayed as "determination". In a case where the determination button 725 is selected, the server apparatus 50 registers the input medium characteristic information in the medium characteristic list.

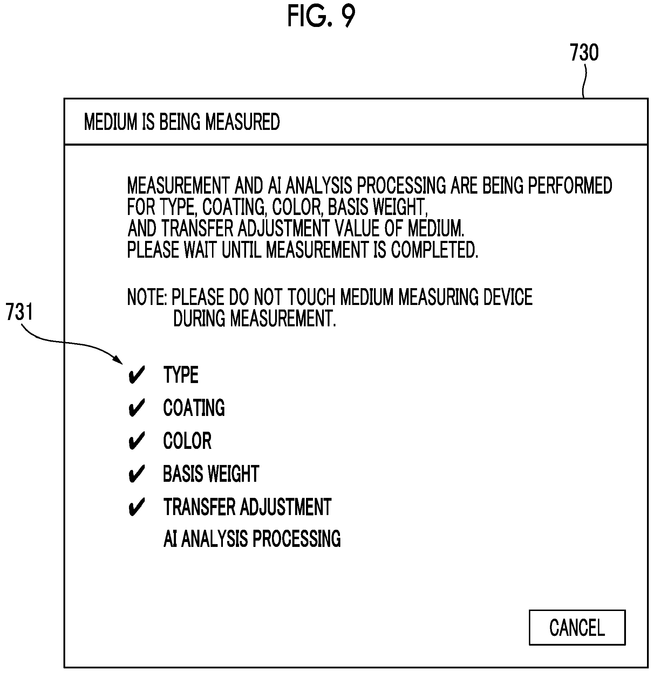

FIG. 9 is a diagram illustrating an example of a waiting screen 730 displayed in a case where the medium measuring device 30 measures the recording medium.

A sentence indicating that the measurement by the medium measuring device 30 and the AI analysis processing by the server apparatus 50 are being performed is displayed on the waiting screen 730. More specifically, as illustrated, "Measurement and AI analysis processing are being performed for the type, the coating, the color, the basis weight, and the transfer adjustment value of the medium. Please wait until the measurement is completed." is displayed in an upper portion in the waiting screen 730.

A progress mark 731 for showing progresses of the measurement by the medium measuring device 30 and AI analysis processing by the server apparatus 50 is displayed on the waiting screen 730. In the illustrated example, five progress marks 731 are given. The progress marks 731 are sequentially displayed in order from an upper side over time. Accordingly, the user sees that the creation of the medium characteristic information by the medium measuring device 30 is in progress. In a case where the progress marks 731 are given to the AI analysis processing, the user recognizes that the creation of the medium characteristic information by the medium measuring device 30 is finished.

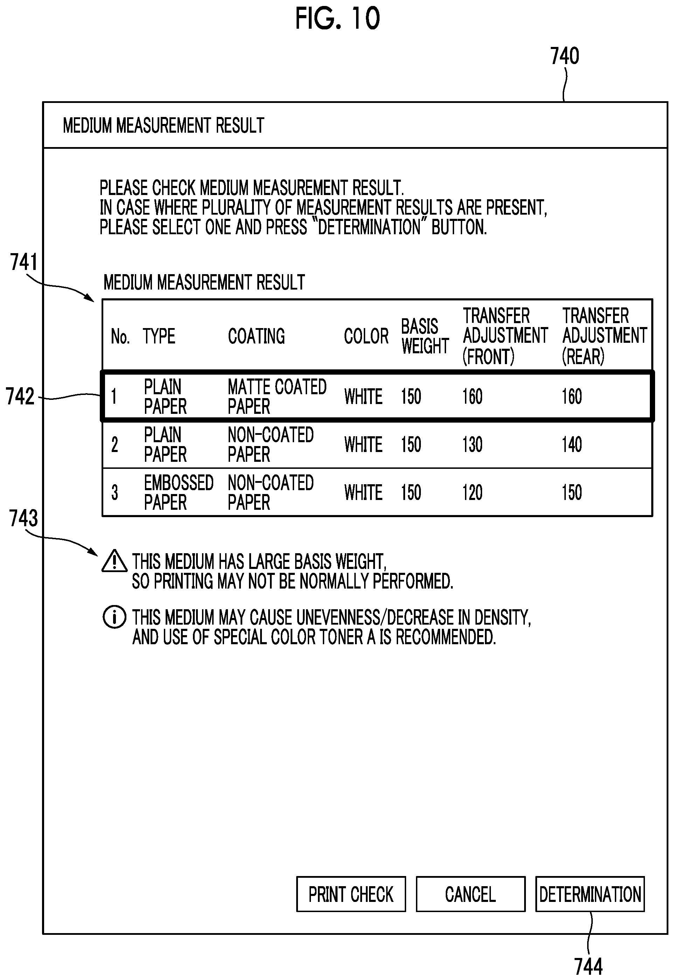

FIG. 10 is a diagram illustrating an example of a result screen 740 showing a measurement result of the medium measuring device 30.

The result screen 740 is displayed after the calculation of the characteristic information and the calculation of the printing parameter by the medium measuring device 30 are completed. The result screen 740 displays the characteristic of the recording medium and the printing parameter calculated using the measurement values provided by the medium measuring device 30. In the illustrated example, three measurement results are displayed in a measurement result display field 741. Each measurement result displays the characteristic of the recording medium and the printing parameter in association with "No." indicating a number for distinguishing the result. In the illustrated example, "type", "coating", "color", and "basis weight" are displayed as the characteristic of the recording medium. In the illustrated example, "transfer adjustment (front)" is displayed as the printing parameter of the front side. In the illustrated example, "transfer adjustment (rear)" is displayed as the printing parameter of the rear side. Specifically, in the measurement result of which "No." is "1", "plain paper" is displayed as "type", "matte coated paper" is displayed as "coating", "white" is displayed as "color", "150" is displayed as "basis weight", "160" is displayed as "transfer adjustment (front)", and "160" is displayed as "transfer adjustment (rear)".

Here, the name is not displayed in the measurement result. Information affecting the printing parameter has a higher display priority of the measurement result than the printing parameter. For example, in FIG. 10, in the measurement result of which "No." is "1", the measurement result is arranged in an order of "type", "coating", "color", "basis weight", and "transfer adjustment", and "type" of "plain paper" has a higher display priority than "transfer adjustment" of "160".

In the measurement result display field 741, a frame 742 indicating which measurement result is selected among the displayed measurement results is displayed. The user selects the measurement result by touching a region in which the measurement result is displayed. The frame 742 moves to surround the selected measurement result.

An item of the characteristic of the recording medium displayed in the measurement result display field 741 and an item of the printing parameter to be displayed are not particularly limited, and other items may be displayed.

A supplement 743 is displayed in a center portion of the result screen 740. In the supplement 743, for example, information determined in advance based on the characteristic of the recording medium is displayed. For example, information for recommending a type of ink toner corresponding to the type of the recording medium is displayed. In addition, for example, whether or not the printing can be performed in accordance with the basis weight of the recording medium is displayed. In the illustrated example, "This medium has a large basis weight, so printing may not be normally performed." and "This medium may cause unevenness/a decrease in density, and use of special color toner A is recommended." are displayed in the supplement 743.

A determination button 744 for determining the selection of the measurement result is displayed in the lower portion of the result screen 740. In a case where the determination button 744 is touched by the user, the display screen transitions to a printing parameter input screen 750 (see FIG. 11).

FIG. 11 is an example of the printing parameter input screen 750.

The illustrated example shows an example of the printing parameter input screen 750 to which a transition is made after selecting and determining the measurement result of which No. of the measurement result is 1 on the result screen 740 illustrated in FIG. 10.

On the printing parameter input screen 750, a plurality of input fields for inputting the printing parameter are displayed together with a display showing the item of the printing parameter. In the illustrated example, a numerical value is automatically input into a numerical value input box 751 for transfer output adjustment. More specifically, "160" is automatically input into the numerical value input box 751 of the front side. In addition, more specifically, "160" is automatically input into a numerical value input box 752 of the rear side. This numerical value is the transfer output adjustment value calculated by the server apparatus 50 based on the measurement result illustrated in FIG. 10. A value calculated by measuring the front side is automatically input into the numerical value input box 751 of the front side. A value estimated from the numerical value input into the input box of the front side is automatically input into the numerical value input box 752 of the rear side.

### <Update and Registration Processing>

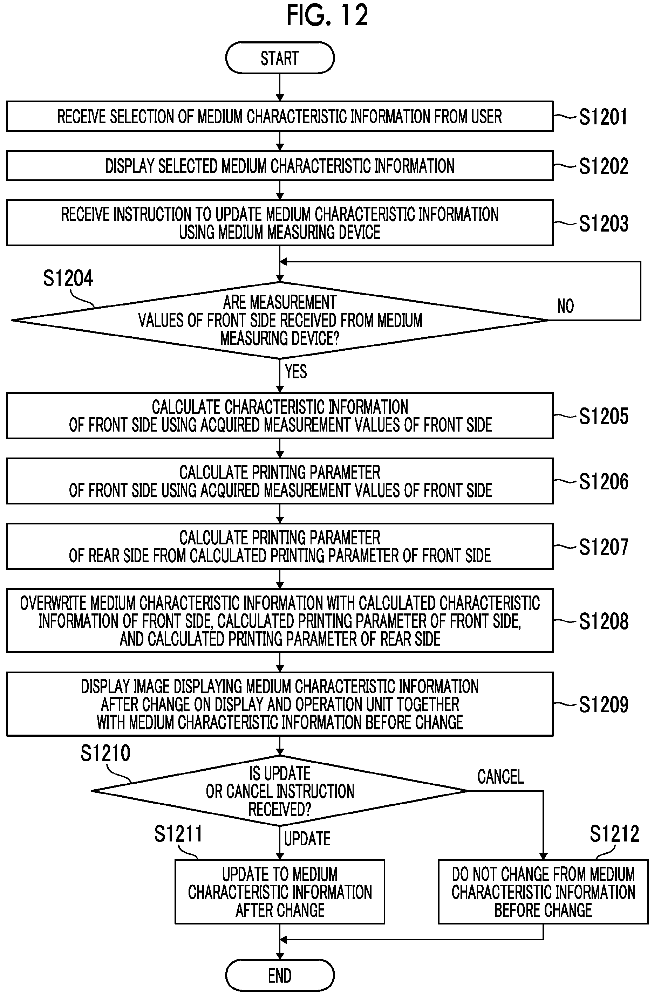

FIG. 12 is a flowchart illustrating an example of a flow of update and registration processing of updating the registered medium characteristic information.

In a case where selection of the medium characteristic information is received from the user (step S1201), the server apparatus 50 displays the selected medium characteristic information on the display and operation unit 14 (step S1202). Here, the selected medium characteristic information is selected from the medium characteristic information stored in the standard list or the medium characteristic information stored in the medium characteristic list.

In a case where an instruction to update the medium characteristic information using the medium measuring device 30 is received from the user (step S1203), the server apparatus 50 determines whether or not the measurement values of the front side are received from the medium measuring device 30 (step S1204). In a case where the measurement values of the front side are not received from the medium measuring device 30 (NO in step S1204), the processing returns to step S1204, and the determination as to whether or not the measurement values of the front side are received from the medium measuring device 30 is repeated (step S1204). In a case where the measurement values of the front side are received from the medium measuring device 30 (YES in step S1204), the server apparatus 50 calculates the characteristic information of the front side using the acquired measurement values of the front side (step S1205). The printing parameter of the front side is calculated using the acquired measurement values (step S1206).

The server apparatus 50 calculates the printing parameter of the rear side from the printing parameter of the front side (step S1207). The server apparatus 50 overwrites the medium characteristic information with the calculated characteristic information of the front side, the calculated printing parameter of the front side, and the calculated printing parameter of the rear side (step S1208). In this case, an item of the printing parameter that may be overwritten and an item of the printing parameter not to be overwritten may be determined in advance. In other words, the printing parameter to be changed and the printing parameter not to be changed may be determined in advance. For example, the printing parameter of which a setting is not changed by the user can be determined as the printing parameter not to be changed.

An image displaying the medium characteristic information after the change together with the medium characteristic information before the change is displayed on the display and operation unit 14 (step S1209). The server apparatus 50 determines whether or not an update or cancel instruction is received from the user (step S1210). In a case where the update instruction is received in step S1210, the medium characteristic information registered in the medium characteristic list is updated to the medium characteristic information after the change (step S1211), and the processing is finished. In a case where the medium characteristic information registered in the standard list is selected in step S1201, the medium characteristic information in the standard list is not changed, and the medium characteristic information after the change is newly registered in the medium characteristic list.

In a case where the cancel instruction is received in step S1210, the medium characteristic information registered in the medium characteristic list is not changed (step S1212), and the processing is finished.

In the update and registration processing, the medium characteristic information is acquired, the medium characteristic information is changed using the measurement values acquired from the medium measuring device 30, and in a case where the update instruction is received from the user, the medium information group is updated.

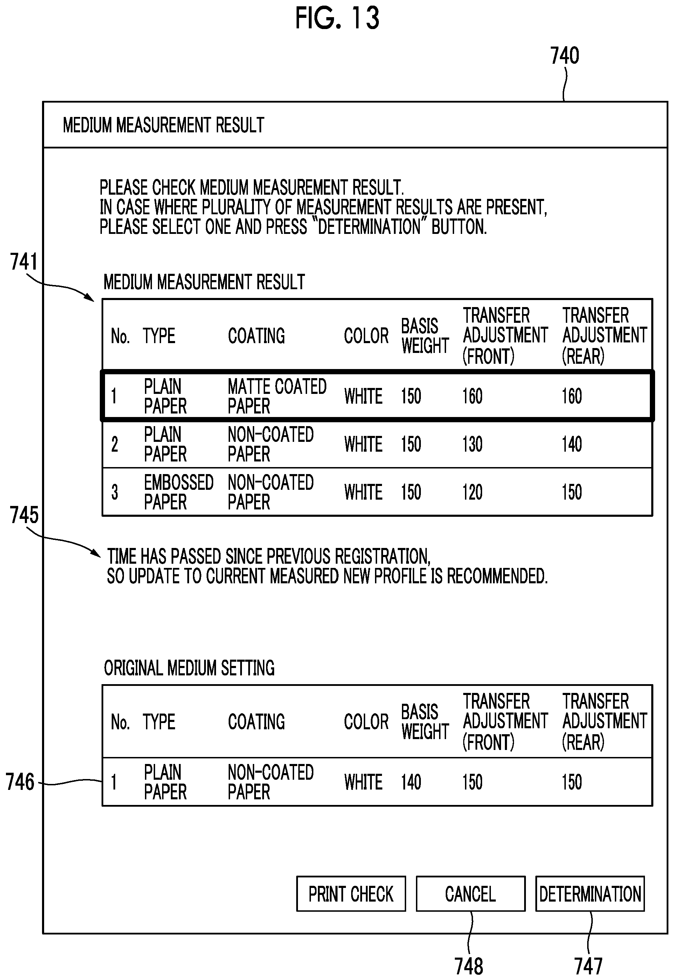

FIG. 13 is a diagram illustrating another example of the result screen 740 showing the measurement result of the medium measuring device 30.

FIG. 13 is an example of the image displayed in step S1209 of FIG. 12.

On the result screen 740 illustrated in FIG. 13, a recommendation display 745 for recommending an update to a new medium characteristic information is displayed. The recommendation display 745 is displayed as "Time has passed since the previous registration, so an update to the current measured new profile is recommended.". The recommendation display 745 is displayed in a case where a predetermined difference or more is present between the medium characteristic information before the update and registration and the medium characteristic information using the newly measured measurement values. The predetermined difference or more is, for example, an elapse of a predetermined time from the previous registration time or update time. Alternatively, the predetermined difference or more is, for example, a difference greater than or equal to a predetermined value in an item determined in advance among the items of the medium characteristic information. Here, examples of the item determined in advance include the characteristic information that easily changes depending on the environment, and the printing parameter that easily changes depending on the environment. Here, the characteristic information that easily changes depending on the environment is, for example, the electrical resistance of the recording medium or a basis weight of the recording medium. The printing parameter that easily changes depending on the environment is, for example, a transfer temperature and the transfer adjustment value. For example, in a case where the recording medium in an open state from a sealed state is stored in a high-temperature and high-humidity environment, the electrical resistance of the recording medium is decreased, and the basis weight of the recording medium is increased after a certain period elapses immediately after opening, compared to the recording medium immediately after opening. Accordingly, in a case where the printing unit 12 of the printing apparatus 10 performs electrostatic transfer to the recording medium, for example, different transfer voltages are used, compared to the recording medium immediately after opening.

On the result screen 740 illustrated in FIG. 13, pre-change information 746 indicating the content of the medium characteristic information before the change is displayed. In the illustrated example, "type", "coating", "color", "basis weight", "transfer adjustment (front)", and "transfer adjustment (rear)" are displayed in the pre-change information 746. The user selects the medium characteristic information displayed in the measurement result display field 741 with reference to the pre-change information 746.

Items displayed in the pre-change information 746 are not particularly limited. For example, items having a predetermined difference or more may be preferentially displayed, compared to the medium characteristic information in the measurement result display field 741. Alternatively, Items determined in advance by the user may be set to be displayed as the items displayed in the pre-change information 746.

On the result screen 740, a determination button 747 for updating the medium characteristic information and a cancel button 748 for not updating the medium characteristic information are displayed. Selection of the determination button 747 corresponds to the reception of the update instruction in step S1210 of FIG. 12. Selection of the cancel button 748 corresponds to the reception of the cancel instruction in step S1210 of FIG. 12.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

### (Supplementary Note)

(((1))) An image forming system comprising:
   a processor configured to perform:
   a control of acquiring measurement information of a first side of a measured recording medium that is information related to a physical characteristic of the first side;
   a control of outputting image forming control information of the first side that is information for controlling image forming on the first side, based on the measurement information of the first side; and
   a control of outputting image forming control information of a second side of the recording medium that is information for controlling image forming on the second side, based on the measurement information of the first side.
(((2))) The image forming system according to (((1))), wherein the processor is further configured to perform:
   a control of determining a characteristic of the recording medium and the image forming control information based on the measurement information of the first side; and
   a control of outputting the image forming control information of the second side based on the characteristic of the recording medium and image forming control information of the recording medium that is information for controlling image forming on the recording medium.
(((3))) The image forming system according to (((2))),
   wherein the image forming control information of the second side includes information related to a transfer voltage for the second side.
(((4))) The image forming system according to any one of (((1))) to (((3))),
   wherein the image forming control information of the second side is information in which performing the image forming on the second side after the image forming on the first side is taken into consideration.
(((5))) The image forming system according to any one of (((1))) to (((4))),
   wherein the information in which performing the image forming is taken into consideration is information in which an effect of any one of a fixing temperature or a transfer voltage on the first side is taken into consideration.

According to the image forming system according to (((1))), the image forming on the front side and the rear side is efficiently set.

According to the image forming system according to (((2))), image forming with higher accuracy can be performed using data of the recording medium in the past accumulated in the image forming system.

According to the image forming system according to (((3))), a difference between charging characteristics of the front side and the rear side can be handled.

According to the image forming system according to (((4))), an effect on a paper sheet during the image forming on the first side can be reduced during the image forming on the second side.

According to the image forming system according to (((5))), variation in image quality and unevenness of density on the rear side and unevenness of are easily reduced, compared to a case where the effect of the fixing temperature or the transfer voltage is not taken into consideration.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: printing apparatus
30: medium measuring device
50: server apparatus
310: sensor unit
510: transmission and reception unit
520: characteristic calculation unit
521: basis weight conversion unit
522: paper type determination unit
523: coating determination unit
524: paper sheet color determination unit
530: parameter calculation unit
531: transfer adjustment value calculation unit
540: storage control unit
550: medium characteristic information search unit
560: medium characteristic information generation unit

## Claims

1. An image forming system comprising:
a processor configured to perform:
a control of acquiring measurement information of a first side of a measured recording medium that is information related to a physical characteristic of the first side;
a control of outputting image forming control information of the first side that is information for controlling image forming on the first side, based on the measurement information of the first side; and
a control of outputting image forming control information of a second side of the recording medium that is information for controlling image forming on the second side, based on the measurement information of the first side.

2. The image forming system according to claim 1, wherein the processor is further configured to perform:
a control of determining a characteristic of the recording medium and the image forming control information based on the measurement information of the first side; and
a control of outputting the image forming control information of the second side based on the characteristic of the recording medium and image forming control information of the recording medium that is information for controlling image forming on the recording medium.

3. The image forming system according to claim 2,
wherein the image forming control information of the second side includes information related to a transfer voltage for the second side.

4. The image forming system according to any one of claims 1 to 3,
wherein the image forming control information of the second side is information in which performing the image forming on the second side after the image forming on the first side is taken into consideration.

5. The image forming system according to claim 4,
wherein the information in which performing the image forming is taken into consideration is information in which an effect of any one of a fixing temperature or a transfer voltage on the first side is taken into consideration.
